# EUROPEAN PATENT APPLICATION

(11) **EP 1 967 950 A2**
(43) Date of publication of application: **10.09.2008**
(21) Application number: 07118042.6
(22) Date of filing: 08.10.2007
(51) Int. Cl.: G06F 11/07

(54) **Multiprocessor system for continuing program execution upon detection of abnormality**

(30) Priority: 13.12.2006 JP 2006335546
(71) Applicant: FUJITSU LIMITED, Kawasaki-shi, Kanagawa 211-8588 (JP)
(72) Inventor: Abe, Masahiro, Kawasaki-shi, Kanagawa 211-8588 (JP)
(74) Representative: Fenlon, Christine Lesley

(57) **Abstract**

A multiprocessor system includes a plurality of processors, wherein instruction codes of a program executed by the processors are stored in an internal memory of each of the processors, wherein one of the processors includes a program counter configured to indicate an address of a program instruction being executed in the internal memory and an offset register configured to store a predetermined offset value, and wherein upon detecting abnormality due to execution of an illegal instruction code fetched from the internal memory of the one of the processor, the one of the processor fetches an instruction code for execution from the internal memory of another one of the processors based on an address that is obtained by adding the offset value stored in the offset register to the address of a program instruction being executed stored in the program counter.

## Description

### BACKGROUND OF THE INVENTION

### 1. Field of the Invention

The present invention generally relates to a multiprocessor system, a processor apparatus, and a method of handling exception upon the occurrence of abnormality for use in computation units, data processing apparatuses, signal processing apparatuses, and the like such as MPU (micro-processing unit) or DSP (digital signal processor) comprised of multiprocessors or multi-cores (which will hereinafter be also referred to as "multiprocessors").

### 2. Description of the Related Art

In recent years, electronic equipment utilizing digital signal processing technology has been widely used owing to the improvement of performance of MPU, DSP, and the like, and more sophisticated equipment and ever smaller devices are developed for practical use. Along with this trend, increasingly diversified and sophisticated functions are required of MPUs and DSPs. Also required is the ability to process a larger amount of programs and data at higher speed.

Some DSPs and MPUs are provided with a memory inside the processor so as to achieve highspeed processing. The size of such embedded memory has being increasing year by year. A program stored in the memory inside the processor may mistakenly be overwritten due to the failure of software or the like since such program is generally stored in a RAM (Random Access Memory). To avoid this, the processor is generally provided with the function to detect the execution of illegal instruction code and the function to perform exception handling by use of an exception handler or the like upon the detection of illegal instruction code.

Patent Document 1 discloses an exception handling method and exception handling apparatus that controls exception handling and recovery from the exception handler in a processor that has a plurality of computation units capable of operating in parallel. The exception handling method and exception handling apparatus detect the occurrence of exception in the computation units capable of operating in parallel for the purpose of preventing the occurrence of multiple exceptions upon the occurrence of exception, thereby avoiding a complex hardware structure and increasing processing speed. When the occurrence of exception is detected, the operation of computation units that have not yet finished their execution of instruction is suspended, and updating is also suspended with respect to a plurality of instruction registers for storing instructions executed by the computation units and also with respect to the next-instruction address registers for storing the addresses of instructions to be executed after the completion of execution of the computation units. Further, exception information required by the exception handler is generated based on the generated exception, followed by saving to the stacks the addresses of instructions stored in the next-instruction address registers to be next executed, the instructions stored in the instruction registers the execution of which is suspended in the computation units, the number of the computation units having suspended the execution of instruction, the instruction in an instruction register having caused the exception a in a computation unit, and the exception information required by the exception handler.

When a program stored inside the processor is destroyed as previously described, it is possible to perform exception handling by use of an abnormality detection mechanism provided in the processor. Since proper processing cannot continue any longer after the destruction of the program, resetting and rebooting will be performed after the exception handling, thereby restarting the processing from the initial state of the processor.

There is no choice but to abort execution even in a case where an illegal instruction code is detected during the execution of a process likely to affect the overall operation of the system (such as the process of setting external hardware that is a shared resource). This may be a cause of instability that may seriously damage the operation of the system. Further, the problem of failed exception handling may arise after activating the exception handler if the program code of the exception handler itself is destroyed.

Accordingly, there is a need for a scheme for a multiprocessor configuration that can guarantee the execution of a program and the reliable execution of exception handling even when an illegal instruction code is detected in the program that affects the overall operation of the system.

[Patent Document 1] Japanese Patent Application Publication No. 5-20070

### SUMMARY OF THE INVENTION

It is a general object of the present invention to provide a scheme for a multiprocessor configuration, that substantially obviates one or nore problems caused by the limitations and disadvantages of the related art.

Features and advantages of the present invention will be presented in the description which follows, and in part will become apparent from the description and the accompanying drawings, or may be learned by practice of the invention according to the teachings provided in the description. Objects as well as other features and advantages of the present invention will be realized and attained by a scheme for a multiprocessor configuration particularly pointed out in the specification in such full, clear, concise, and exact terms as to enable a person having ordinary skill in the art to practice the invention.

To achieve these and other advantages in accordance with the purpose of the invention, the invention provides a multiprocessor system which includes a plurality of processors, wherein instruction codes of a program executed by the processors are stored in an internal memory of each of the processors, wherein one of the processors includes a program counter configured to indicate an address of a program instruction being executed in the internal memory and an offset register configured to store a predetermined offset value, and wherein upon detecting abnormality due to execution of an illegal instruction code fetched from the internal memory of the one of the processor, the one of the processor fetches an instruction code for execution from the internal memory of another one of the processors based on an address that is obtained by adding the offset value stored in the offset register to the address of a program instruction being executed stored in the program counter.

According to another aspect of the present invention, a processor apparatus includes an internal memory configured to store instruction codes of a program to be executed, a program counter configured to count an address of a program being executed, and an offset register configured to store a predetermined offset value, wherein upon detecting abnormality due to execution of an illegal instruction code fetched from the internal memory, an instruction code is fetched for execution from an internal memory of another processor apparatus of a multiprocessor system based on an address that is obtained by adding the offset value stored in the offset register to the address counted by the program counter.

According to another aspect of the present invention, a method of handling exception is provided for a multiprocessor system including a plurality of processors, wherein instruction codes of a program executed by the processors are stored in an internal memory of each of the processors. The method includes storing a predetermined offset value in an offset register provided in one of the processors, detecting abnormality caused by execution of an illegal instruction code in the one of the processors to fetch an instruction code for execution from an internal memory of another one of the processors based on an address that is obtained by adding the offset value stored in the offset register to an address counted by a program counter of the one of the processors, and activating an exception handler upon being triggered by an instruction to return to a parent routine after executing the instruction code fetched from the internal memory of another one of the processors.

According to at least one embodiment of the present invention, an instruction code is fetched from the internal memory of another processor based on the address that is obtained by adding an offset to a program counter, upon detecting abnormality during the execution of a program in a multiprocessor configuration, so that a safe program of another processor is executed, which guarantees the proper execution of the program.

Further, the monitored-range registers are configured to store a start address and end address of a program that may affect the overall operation of the system. Upon detecting abnormality due to the execution of an illegal instruction code during the execution of a program situated within a range specified in the monitored-range registers, the above-noted safe program of another processor is executed, which guarantees the proper execution of the program that may affect the overall operation of the system.

Further, after completing the execution of the safe program of another processor upon the detection of abnormality caused by the execution of an illegal instruction code, an exception handler for the detected abnormality is activated, thereby ensuring reliable exception handling.

### BRIEF DESCRIPTION OF THE DRAWINGS

Other objects and further features of the present invention will be apparent from the following detailed description when read in conjunction with the accompanying drawings, in which:
Fig. 1 is a drawing showing an example of the configuration of a processor apparatus according to the present invention;
Fig. 2 is a drawing showing an example of the configuration of a multiprocessor configuration according to an embodiment of the present invention;
Figs. 3A and 3B are drawings each showing an example of an operation flow performed upon the detection of abnormality in a slave processor, and
Fig. 4 is a drawing showing a specific example of memory space and instruction code fetch according to the embodiment of the present invention.

### DESCRIPTION OF THE PREFERRED EMBODIMENTS

In the following, embodiments of the present invention will be described with reference to the accompanying drawings.

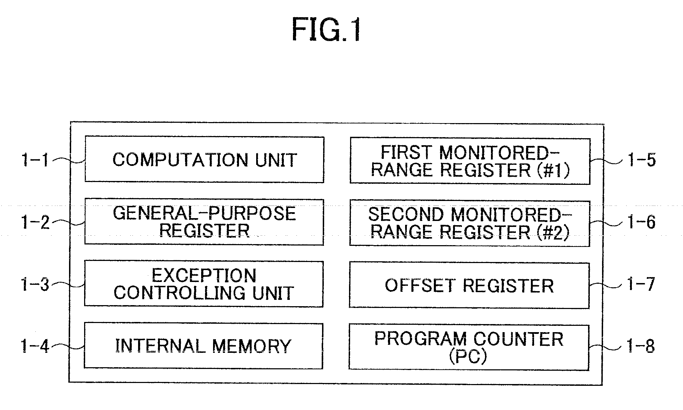

Figs. 1 through 4 are drawings showing an embodiment of the present invention. Fig. 1 is a drawing showing an example of the configuration of a processor apparatus according to the present invention. The processor apparatus shown in Fig. 1 includes a computation unit 1-1 serving as a core circuit, a general-purpose register 1-2, an exception controlling unit 1-3 for controlling exception handling, an internal memory 1-4 for storing programs and data for execution by the processor apparatus, a first monitored-range register (#1) 1-5 indicating the start address of a program to be monitored, a second monitored-range register (#2) 1-6 indicating the end address of the program to be monitored, an offset register 1-7, and a program counter (PC) 1-8 indicating the address of an instruction being executed.

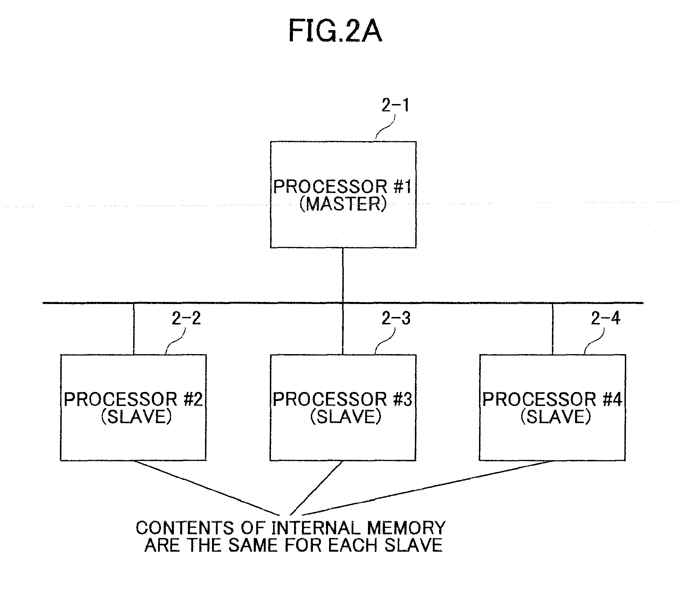

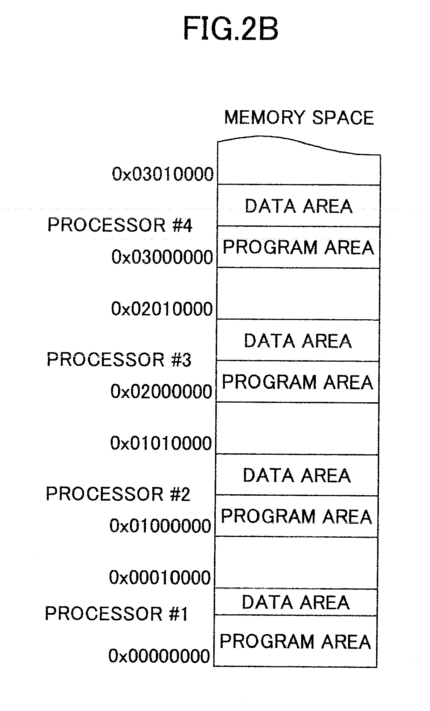

Figs. 2A and 2B are drawings showing an example of the configuration of an embodiment of a multiprocessor system that is constructed by use of processor apparatuses of the present invention. Fig. 2A shows an example of the connections of the multiple processors, and Fig. 2B shows the logical memory space of the program area and data area of each processor. Specifically, Fig. 2B illustrates an example of address allocation in the memory space for the program area and data area of the internal memory 1-4 of each processor.

A first processor (#1) 2-1 is a master processor, and second through fourth processors (#2 through #4) 2-2 through 2-4 are slave processors. The data structure of the internal memory is the same for each of the second through fourth processors (#2 through #4: slave processors) 2-2 through 2-4. That is, as shown in Fig. 2B, the program area and data area of the second processor #2 are allocated to addresses 0x01000000 through 0x01010000, the program area and data area of the third processor #3 allocated to addresses 0x02000000 through 0x02010000, and the program area and data area of the fourth processor #4 allocated to addresses 0x03000000 through 0x03010000.

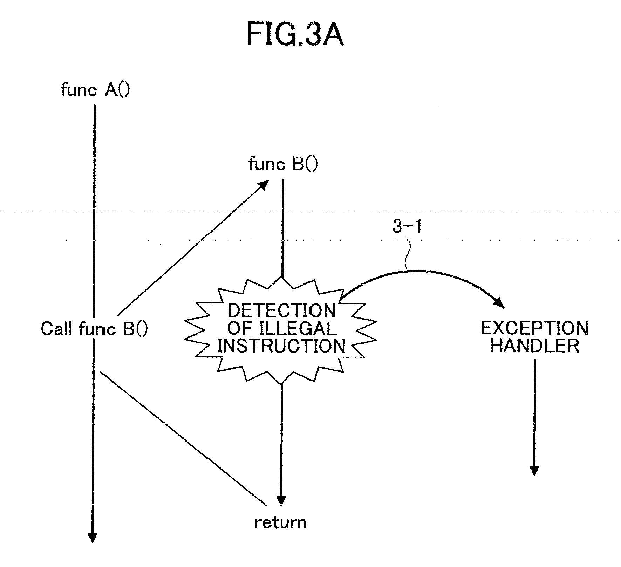

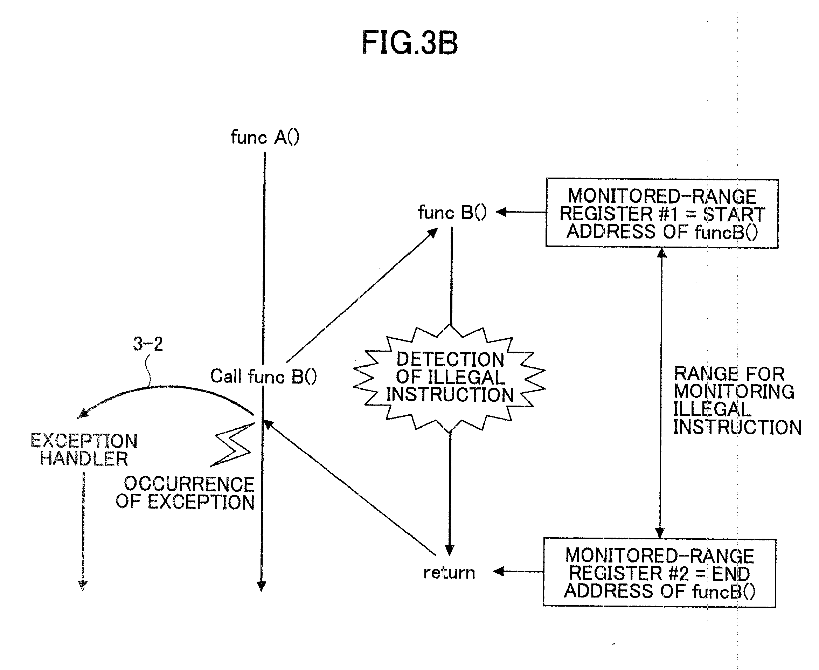

Figs. 3A and 3B are drawings each showing an example of an operation flow performed upon the detection of abnormality in a slave processor. Fig. 3A shows a related-art operation flow, and Fig. 3B shows an operation flow of the embodiment of the present invention. This example illustrates a case in which an event that requires exception handling occurs due to the detection of an illegal instruction code during the execution of a function funcB() called by a function funcA() while the program is being executed in the second processor #2.

In the related-art operation upon the detection of abnormality, as shown in Fig. 3A, an event that requires exception handling occurs during the execution of the function funcB (), resulting in the second processor #2 activating an exception handler (3-1), so that the exception handler takes over the execution. It is not possible to continue the execution of the function funcB() because the program of the function funcB() is suffering abnormality due to some sort of failure.

In the operation flow of the present embodiment as shown in Fig. 3B, on the other hand, the start address of the function funcB() that is the monitored program is stored in the first monitored-range register (#1) 1-5, and the end address of the function funcB() is stored in the second monitored-range register (#2) 1-6 prior to the execution of the program (i.e., the function funcB() in this example) that may cause serious damage upon the suspension of program execution resulting from the occurrence of abnormality. Further, the start position 0x0200000 of the program area of another processor (e.g., the third processor #3) in the logical memory space is also stored in the offset register 1-7.

When an illegal instruction code is detected due to some sort of failure during the execution of the function funcB() called by the function funcA() while the program is being executed by the second processor #2, as shown in Fig. 3B, it is detected that the illegal instruction is part of the monitored program within the range specified by the first and second monitored-range registers (#1, #2) 1-5 and 1-6. Upon such detection, the second processor #2 fetches a subsequent instruction code from the address that is obtained by adding the value 0x02000000 specified in the offset register 1-7 to the current count value stored in the program counter (PC) 1-8.

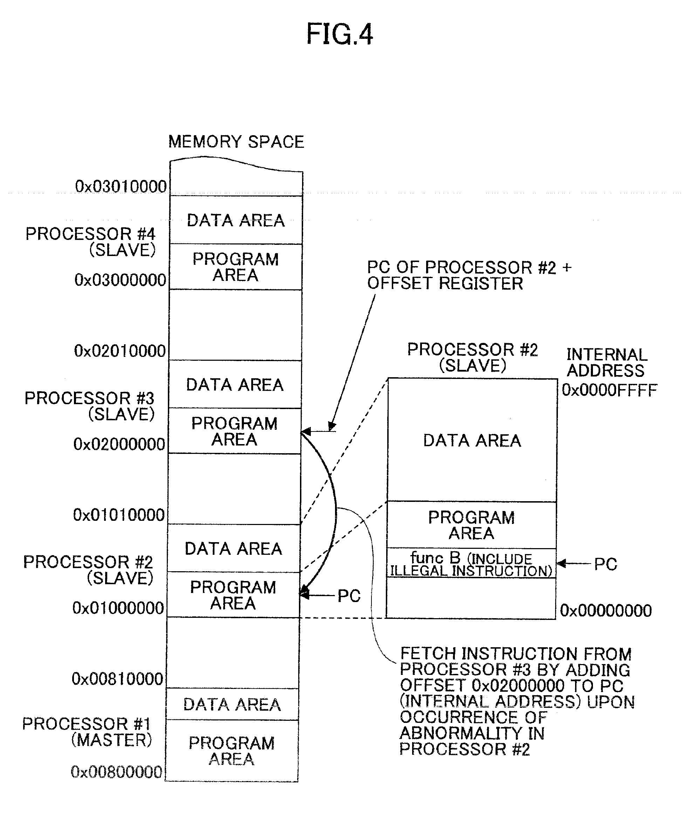

Fig. 4 is a drawing showing a specific example of instruction code fetch according to the embodiment of the present invention. On the lefthand side, Fig. 4 shows the address allocation of the program area and data area of the first processor (master) #1 and the second through fourth processors (slaves) #2 through #4 in the memory space. The program area and data area of the first processor #1 are allocated to addresses 0x00800000 through 0x00810000, the program area and data area of the second processor #2 allocated to addresses 0x01000000 through 0x01010000, the program area and data area of the third processor #3 allocated to addresses 0x02000000 through 0x02010000, and the program area and data area of the fourth processor #4 allocated to addresses 0x03000000 through 0x03010000.

On the right-hand side, Fig. 4 shows the address space of the internal memory of one of the processors (the second processor #2 in this example), in which the program area and data area of the second processor #2 are allocated to addresses 0x00000000 to 0x0000FFFF.

When the occurrence of abnormality resulting from the execution of an illegal instruction code is detected during the execution of the program of the function funcB () situated in the area specified by the first monitored-range register (#1) and the second monitored-range register (#2), a subsequent instruction code is fetched for execution from the memory space address that is obtained by adding the offset value (0x02000000) specified in the offset register to the value of the program counter (PC) indicative of the current address of the executed program.

Namely, instruction codes are fetched not from the internal memory of the second processor #2 but from the internal memory of the third processor #3 that is running properly, so that the execution of the function funcB() continues to its end without activating an exception handler. In addition, a flag that indicates the occurrence of abnormality is set upon the detection of occurrence of abnormality. Using as a trigger the return instruction to return to the parent routine function funcA() that is executed at the end of the function funcB(), an exception is generated that activates the exception handler under the control of the exception controlling unit 1-3, thereby performing the exception handling (3-2).

In the multiprocessing environment comprised of a master processor and a plurality of slave processors, each slave processor is provided with the same execution program codes in most cases. In such environment, an address difference from the address of the same program code that exists in the program area of another processor in the logical memory space is stored as an offset value in the offset register 1-7. When abnormality occurs during the execution of the program, the offset value stored in the offset register 1-7 is added to the count value stored in the program counter (PC) 1-8 indicative of the address of the currently executed program instruction, so that the same instruction is fetched for execution from the internal memory of another slave processor that is properly running, thereby making it possible to continue the execution of the program.

With this configuration it is possible to continue program execution to its end without having the execution of a certain important program suspended in the slave processor even when abnormality occurs during the execution of the important program that may affect the overall operation of the system. Since the activation of an exception handler is temporarily suppressed at the time of occurrence of abnormality in the program of the monitored range specified in the monitored-range registers, the exception handler is subsequently activated in response to the execution of an instruction code for returning to the parent routine, from which the program has been called, upon exiting from the execution of the program of the monitored range. This ensures the reliable execution of exception handling.

Further, the present invention is not limited to these embodiments, but various variations and modifications may be made without departing from the scope of the present invention.

## Claims

1. A multiprocessor system comprising a plurality of processors, wherein instruction codes of a program executed by the processors are stored in an internal memory of each of the processors,
**characterized in that** one of the processors includes a program counter configured to indicate an address of a program instruction being executed in the internal memory and an offset register configured to store a predetermined offset value,
and wherein upon detecting abnormality due to execution of an illegal instruction code fetched from the internal memory of the one of the processor, the one of the processor fetches an instruction code for execution from the internal memory of another one of the processors based on an address that is obtained by adding the offset value stored in the offset register to the address of a program instruction being executed stored in the program counter.

2. The multiprocessor system as claimed in claim 1, wherein the one of the processor includes monitored-range registers configured to store a start address and end address of a program to be monitored, and wherein upon detecting abnormality due to execution of an illegal instruction code during execution of the program situated within a range specified in the monitored-range registers, the one of the processor fetches an instruction code for execution based on the address that is obtained by adding the offset value stored in the offset register to the address of a program instruction being executed stored in the program counter.

3. The multiprocessor system as claimed in claim 2, wherein the one of the processors is configured to activate an exception hander for handling the detected abnormality after completing the execution of the program situated within the range specified in the monitored-range registers by fetching an instruction code for execution based on the address that is obtained by adding the offset value stored in the offset register to the address of a program instruction being executed stored in the program counter.

4. A processor apparatus, comprising:
an internal memory configured to store instruction codes of a program to be executed;
a program counter configured to count an address of a program being executed; and
an offset register configured to store a predetermined offset value,
**characterized in that** upon detecting abnormality due to execution of an illegal instruction code fetched from the internal memory, an instruction code is fetched for execution from an internal memory of another processor apparatus of a multiprocessor system based on an address that is obtained by adding the offset value stored in the offset register to the address counted by the program counter.

5. A method of handling exception in a multiprocessor system including a plurality of processors, wherein instruction codes of a program executed by the processors are stored in an internal memory of each of the processors, said method **characterized by** comprising:
storing a predetermined offset value in an offset register provided in one of the processors;
detecting abnormality caused by execution of an illegal instruction code in the one of the processors, followed by fetching an instruction code for execution from an internal memory of another one of the processors based on an address that is obtained by adding the offset value stored in the offset register to an address counted by a program counter of the one of the processors; and
activating an exception handler upon being triggered by an instruction to return to a parent routine after executing the instruction code fetched from the internal memory of another one of the processors.
